# EUROPEAN PATENT APPLICATION

(11) **EP 1 793 563 A1**
(43) Date of publication of application: **06.06.2007**
(21) Application number: 05447266.7
(22) Date of filing: 30.11.2005
(51) Int. Cl.: H04L 29/12

(54) **Apparatus and method for connecting to servers located behind a network address translator**

(71) Applicant: Thomson Telecom Belgium, 2650 Edegem (BE)
(72) Inventor: Van der Poel, Dirk, 2650 Edegem (BE)
(74) Representative: Kohrs, Martin

(57) **Abstract**

The present invention concerns an interconnection device (1) for performing network address translation and redirecting a request to a destination device.
The interconnection device (1) comprises a first interface (2) to a first network (10) a second interface (3) to a second network (11) routing means (4) for routing a packet between the first interface (2), the second interface (3) and the interconnection device (1), address translating means (5) for translating a source address of a packet coming from the first network (10) destined to the second network (11), and translating a destination address of a packet coming from the second network (11) destined to the first network (10), and means for detecting whether a request from a second device located on the second network is destined to itself or to a first device (12) located on the first network (10).
The interconnection device (1) comprises redirecting means (6) for on detection of a request from the second device to access an application located on the first device (12), updating said address translation means, and indicating the modified destination address to the second device (13).

## Description

The present invention relates to an interconnection device performing network address translation and a method to redirect a request to a destination device.

The number of Internet Protocol (IP) Version 4 addresses is limited. Service providers typically only give one global IP address to the Internet Gateway of each subscriber. The devices located on a local network, behind an Internet Gateway, are allocated private IP addresses usually managed by a local network manager. To allow a local device with a private IP address to communicate with other subscribers or with servers located on the Internet, an Internet Gateway device translates the private IP address of the device into the public IP address. This way a server can respond to the global IP address that is addressable from the Internet. This translation is commonly referred to as Network Address Translation (NAT).

An application running on the device may want to act as a server and accept incoming connections from the Internet. The Internet Gateway then needs to be aware of the fact that this incoming connection is not destined to itself, but to the device. This is achieved by configuration of a NAT portmap. This specifies to which local device and port an Internet Gateway should forward a request received from the Internet with a global address and port.

As a consequence, any request received on a port (e.g. TCP port 80 for HTTP requests to a web server) is translated and forwarded according to the NAT portmap to a local device that holds a web server and has been identified as such in the NAT portmap.

In combination with dynamic DNS (a service that maps the dynamic Internet Gateway global IP address to a static name), a user on the Internet can connect to the local device behind the Internet Gateway.

In a network (including a home network) there is likely more than one device running a server application. For example, a number of networked devices run a HTTP web server for device configuration (e.g. the Internet Gateway, networked web cameras, media servers). Someone on the Internet may want to connect via a web browser to not only a single device, but to several devices on the local network running a web server (e.g. to view / upload / download pictures taken, to configure a PVR to record a television program and/or to configure the Internet Gateway parental control).

A HTTP request received on port 80 on the Internet Gateway IP address will in presence of a NAT portmap be sent to a local device or in absence of a NAT portmap will be handled by the Internet Gateway web server. With a NAT portmap, an incoming request to an application server is always forwarded to the device configured in the portmap. To connect to the same application server running on another device, it is necessary to create a new NAT portmap or reconfigure the existing NAT portmap. The NAT does not allow to make several simultaneous connections to multiple devices running the same application on the local network using a single "outbound" port.

The present invention concerns an interconnection device performing network address translation and a method to redirect a request to a destination device.

To this end, the invention relates to an interconnection device comprising:
- a first interface to a first network,
- a second interface to a second network,
- routing means for routing a packet between the first interface and the second,
- address translating means for translating a source address of a packet coming from the first network destined to the second network, and translating a destination address of a packet coming from the second network destined to the first network, and
- means for detecting whether a request from a second device located on the second network is destined to the interconnection device or to a first device located on the first network.

According to the invention, the interconnection device comprises redirecting means for, on detection of a request from the second device to access an application located on the first device, modifying the destination address of the application on the first device, and indicating the modified destination address to the second device.

According to an embodiment of the invention, the redirecting means further comprise means for updating the address translating means with the modified destination address.

Preferably, the interconnection device comprises securing means for authenticating the second device, the redirecting means being used with an authenticated device only.

This then enhances the security: only an authenticated device may connect to a device located on the first network. The interconnection device may then control the access to devices located on the first network, for example in some period of time only or to some end users only.

According to a first preferred embodiment the interconnection device comprises an HTTP server for detecting a destination address of an HTTP request based on a URL path.

According to a second preferred embodiment the interconnection device comprises an HTTP server and a user interface comprising a list of applications and devices located on the first network, the user interface being accessible from the second device, and the interconnection device detecting the destination of the request based on a user selection of a device of the first network on the user interface.

According to an embodiment, the HTTP server indicates the new address of an HTTP server located on the first device to the second device through a HTTP redirect.

The HTTP redirect is defined in the HTTP 1.0 (RFC1945) or HTTP 1.1 (RFC2616).

Preferably, the new address comprises a new port number.

The new destination address is then slightly modified, with a port number that is not used by the devices of the first network. And the network address translation is updated with the replacement of the requested port number by the new port number.

Another object of the invention is a method at an interconnection device comprising an interface to a first network, an interface to a second network, address translating means, for redirecting a second device located on the second network.

According to the invention, the method comprises the steps of
- detecting a request from the second device destined to an application running on a first device on the first network;
- modifying the destination address of the application on the first device;
- updating the address translating means with the modified destination address; and
- indicating the modified destination address to the second device.

Preferably the method comprises a step of authenticating the second device before redirecting it.

Preferably, the request is a HTTP request, the indication of the new address being done through a HTTP redirect.

According to an embodiment, on detection of a request from a third device to access the same application located on the first device, the method comprises the step of indicating either the modified destination address or another different destination address.

For simplicity the same address as the one used for the second device is used for the third device. Using a different address for the second and the third device enhances the security. A new address is used for a single device.

The invention will be better understood and illustrated by means of the following embodiment and execution examples, in no way restrictive, with reference to the appended figures among which:
- Figure 1 is a block diagram of an interconnection device compliant with the invention;
- Figure 2 is a flow chart detailing the translation process.

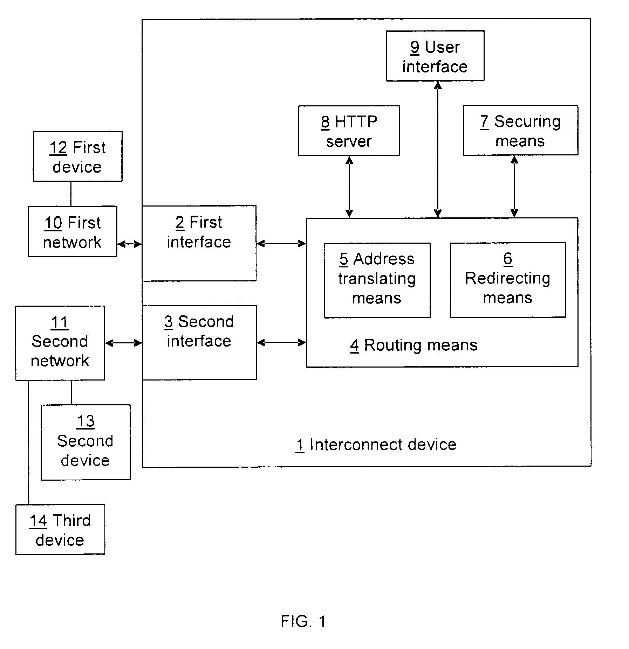

In Figure 1, the represented blocks are purely functional entities, which do not necessarily correspond to physically separate entities. Namely, they could be developed in the form of software, or be implemented in one or several integrated circuits.

The exemplary embodiment comes within the framework of a transmission on a TCP/IP network, but the invention is not limited to this particular environment and may be applied within other types of networks.

Figure 1 describes the interconnection device of the invention.

The interconnection device could be for example a modem such as for example a DSL modem (for "Digital Subscriber Line") or a residential gateway that connects a residential network to the public Internet network. The interconnection device 1 comprises two network interfaces, a first network interface 2 and a second network interface 3, that respectively connect the interconnection device 1 to the first network 10 and to the second network 11. The first network is also referred to as the local network hereafter and corresponds for example to a home network. The second network corresponds for example to the public network that may be the Internet network.

A first device 12 is connected to the first network 10. A second device 13 is connected to the second network 11. The first device and the second device may be desktop computers.

The interconnection device 1 comprises routing means 4 for routing packets between the first network and the second network. The routing means apply rules as defined by the address translating means 5, which are based on a network translation address protocol.

The interconnection device comprise s a HTTP server 8. It also comprises a user interface 9 comprising a list of applications and devices located on the first network. The user interface is accessible from any device. The user interface is for example a web site on the HTTP server. Any device connecting to the interconnection device on port 80 can access the user interface, potentially after authentication.

The interconnection device comprises redirecting means for redirecting a request from a request from a second device to the correct destination address.

The interconnection device comprises securing means for securing the communication between the interconnection device and a device located on the second network. It authenticates the device using username / password via HTTP, or alternatively a Transport Layer Security (TLS) certificate is checked as indicated in RFC 2246.

The address translating means conform, in the present embodiment of the invention, to the Network Address Port Translation, noted NAPT, as defined in the RFC 3022. NAPT is a method by which network addresses and their TCP/UDP (Transmission Control Protocol / User Datagram Protocol) ports are translated into a single network address and its TCP/UDP ports. This permits to connect an area with private addresses to an area with globally unique registered addresses.

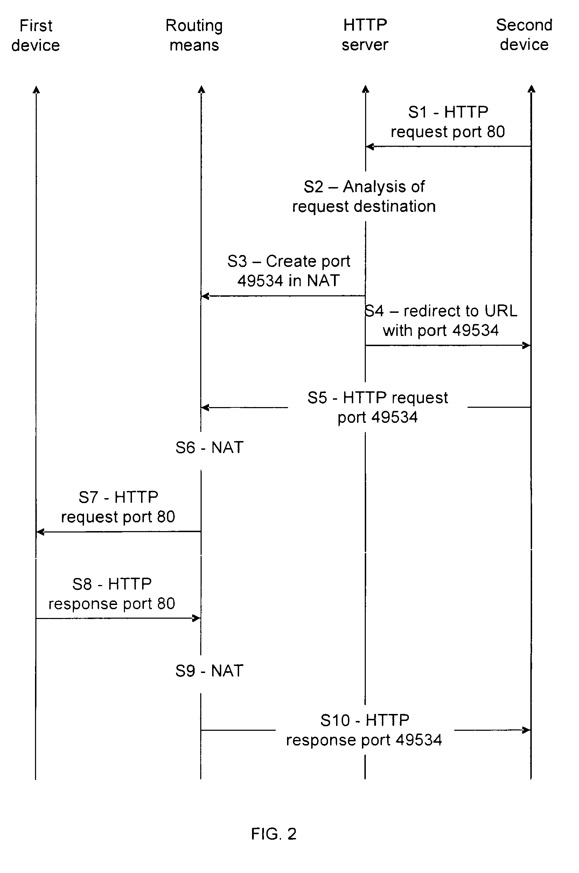

Figure 2 represents a flow chart of the messages exchanges, according to the present embodiment, between the first device located on the first network, the second device located on the second network, the routing means of the interconnection device and the HTTP server located in the interconnection device. More precisely the flow takes place between an HTTP client located in the second device and an HTTP server located in the first device.

The flow between a client and a server uses HTTP as an example. Other client-server protocols are applicable, such as for example the FTP.

The scenario is as follows:
Step 1: A user on the Internet, which represents the second network, browses to the Internet Gateway, which represents the interconnection device, through a HTTP request. The user is located at a friend's place or at work with Internet access. To access the internet gateway, the user may know the IP address of the gateway. More likely it uses a dynamic DNS service in which the Internet Gateway updates the service with its IP address, so that a user can connect using a fixed domain name, e.g. myhome.dyndns.org.
   The HTTP request is secured via Transport Layer Security / Secure Socket Layer (TLS / SSL) encryption (as indicated in RFC2246 and RFC2818). It may also be secured via the Internet Gateway performing HTTP authentication of the user (as indicated in RFC2617). Other Internet Gateway ports and unsolicited connections from the Internet would for security reasons typically be blocked by the Internet Gateway firewall.
Step 2: The HTTP server of the Internet Gateway determines whether the request is destined to itself or to a device on the local network. This can be done in multiple ways, including among other:
   - By means of the HTTP request URL path. For example, the path "https://myhome.dyndns.org/home/mypc" could be interpreted by the HTTP server as follows. "/home/" would mean the request is destined not to itself, but to a local device. The part following "/home" (in this case "/mypc") would be interpreted as the name of the device the user wants to connect to. This name would be known by the Internet Gateway when it assigns IP addresses to devices on the local network (using DHCP).
   - By means of local pages providing an overview based upon the first network device list. When the user clicks on a device of the list, for example "Mydevice", the HTTP server knows the user requests an access to a local device that is "Mydevice".
      If the HTTP request is not destined to a local device, the HTTP server returns e.g. its administration user interface web pages so the end-user can reconfigure or monitor the status of the home network and take any other action. The user can for example manually configure the NAT portmaps, the firewall, the local device addressing or Internet configuration settings.
Step 3: The HTTP server of the Internet Gateway finds out the user wants to connect to a device located in the local network. It automatically creates a new NAT portmap in the NAT, knowing the local device name and corresponding IP address. The new port map corresponds to the address of the local device viewed from the second network.
   This portmap uses a new port, which is currently a port not used by the NAT (e.g. port 49534). It maps the new port to the local device IP address and port 80 (HTTP).
Step 4: The HTTP server redirects the web browser "temporarily" using the redirect status codes as indicated the HTTP 1.0 (RFC1945) or HTTP 1.1 (RFC2616). The location header is set to the Internet Gateway hostname, or IP address, with the new port number (e.g. http://myhome.dyndns.org:49534).
Step 5: On a HTTP redirect, the HTTP client automatically issues a new HTTP request to the Internet Gateway, but this time to the new port number (port 49534).
Step 6: Upon receiving the HTTP request on port 49534, the IP router performs NAT according to the automatically configured NAT portmap. This means that the destination IP address is translated from the Internet Gateway's global one into the local device IP address, and the destination port is translated from 49534 to 80.
Step 7: The IP router forwards the HTTP request based upon the translated address and port (local device and port 80).
Step 8: The local device receives the HTTP request and responds for example with a HTML page.
Step 9: The Internet Gateway performs NAT on the response, translating the source IP address into the gateway's global IP address and
the source port from 80 into 49534.
Step 10: The translated HTTP response is forwarded to the HTTP client.

After a timeout period of inactivity, the automatically created NAT portmap is deleted. From this point on, a user wanting to connect to a local device starts from step 1 again.

The timeout value, noted 'autoNAT', may be controlled through the user interface of the gateway. It may be set to the default value of 5 minutes. For security reasons the default value is expressed in a number of minute magnitude. The automatically created NAT portmap should be deleted after some client inactivity. Someone else wanting to connect shouldn't be able to access the home network without first authenticating to the HTTP server.

When the interconnection device reboots, the automatically created NAT portmap is also deleted.

When a third device located on the second network requests later on to access the same application on the first network, the same new portmap is used; after authentication the Internet gateway indicates the portmap that has already been allocated.

In an alternative embodiment, a different portmap is used for each different requesting device. The Internet gateway then allocates a different port number for each device located on the second network requesting to access a same application on the first network. In the scenario as described in figure 2, the third device would then receive a port number different from 49534 as for the destination address; for example the port number 49535.

## Claims

1. Interconnection device (1) comprising:
- a first interface (2) to a first network (10),
- a second interface (3) to a second network (11),
- routing means (4) for routing a packet between said first interface (2) and said second interface (3),
- address translating means (5) for translating a source address of a packet coming from said first network (10) destined to said second network (11), and translating a destination address of a packet coming from said second network (11) destined to said first network (10),
- means for detecting whether a request from a second device (13) located on the second network (11) is destined to said interconnection device (1) or to a first device (12) located on the first network (10),
**characterized in that** it comprises redirecting means (6) for,
- on detection of a request from the second device (13) to access an application located on the first device (12), modifying the destination address of said application, and
- indicating said modified destination address to the second device (13).

2. Interconnection device (1) according to the preceding claim, **characterized in that** said redirecting means (6) further comprise means for updating said address translating means (5) with the modified destination address.

3. Interconnection device according to any of the preceding claims, **characterized in that** it comprises securing means (7) for authenticating said second device (13), said redirecting means (6) being used with an authenticated device only.

4. Interconnection device according to any of the preceding claims, **characterized in that** it comprises an HTTP server (8) for detecting a destination address of an HTTP request based on a URL path.

5. Interconnection device according to any of the preceding claims, **characterized in that** it comprises an HTTP server (8) and a user interface (9) comprising a list of applications and devices located on the first network (1), said user interface (9) being accessible from said second device (13), and said interconnection device detecting said destination of said request based on a user selection of a device of the first network (10) on said user interface (9).

6. Interconnection device according to any of the two preceding claims, **characterized in that** said HTTP server (8) indicates the new address of an HTTP server located on said first device (12) to the second device (13) through a HTTP redirect.

7. Interconnection device according to the preceding claims, **characterized in that** said new address comprises a new port number.

8. Method at an interconnection device (1) comprising a first interface (2) to a first network (10), a second interface (3) to a second network (11), address translating means (5), for redirecting a second device (13) located on said second network (11),
**characterized in that** it comprises the steps of
- detecting a request from said second device (13) destined to an application running on a first device (12) on the first network (10);
- modifying the destination address of said application on said first device (12);
- updating said address translating means (5) with the modified destination address; and
- indicating the modified destination address to the second device (13).

9. Method according to the preceding claim, **characterized in that** it comprises the step of authenticating said second device (13) before redirecting it.

10. Method according to the preceding claim, **characterized in that** said request is a HTTP request, and the indication of the new address is done through a HTTP redirect.

11. Method according to any of the claims 8 to 10, **characterized in that** it comprises the step of, on detection of a request from a third device (14) to access said application located on the first device (12), indicating either the modified destination address or another different destination address.
